Europäisches Patentamt

European Patent Office

Office européen des brevets

(11) Publication number: **0 357 518**
A1

# (12) EUROPEAN PATENT APPLICATION

(21) Application number: **89420255.5**

(22) Date of filing: **13.07.89**

(51) Int. Cl.5: **C 08 K 5/09**
C 08 K 3/26, C 08 L 67/02,
C 08 G 63/183

(30) Priority: **25.07.88 US 224021**

(43) Date of publication of application:
**07.03.90 Bulletin 90/10**

(84) Designated Contracting States: **ES GR**

(71) Applicant: **EASTMAN KODAK COMPANY**
**343 State Street**
**Rochester New York 14650 (US)**

(72) Inventor: **Sublett, Bobby Jones c/o Eastman Kodak**
**Company**
**Patent Department 343 State Street**
**Rochester New York 14650 (US)**

**Overton, James Ray c/o Eastman Kodak Company**
**Patent Department 343 State Street**
**Rochester New York 14650 (US)**

(74) Representative: **Parent, Yves et al**
**Kodak-Pathé Département Brevets et Licences Centre**
**de Recherches et de Technologie Zone Industrielle**
**F-71102 Chalon-sur-Saône Cédex (FR)**

(54) Poly(ethylene terephthalate) compositions and method for their preparation.

(57) Disclosed are homopolyesters having repeating units from terephthalic acid and ethylene glycol containing small quantitites of alkali or alkaline earth metal compounds which improve crystallization rates from the glass state. The method of producing such homopolyesters and thermoformed articles made therefrom are also disclosed.

EP 0 357 518 A1

## Description

## POLY(ETHYLENE TEREPHTHALATE) COMPOSITIONS AND METHOD FOR THEIR PREPARATION

Technical Field

This invention relates to poly(ethylene terephthalate) compositions and the method for their preparation. The poly(ethylene terephthalate composition of this invention have rapid crystallization rates from the glassy state. Such polyesters are suitable for producing sheet material which is thermoformable and heat settable to form thin-walled articles such as food trays. The invention provides a process for producing such polyesters using an alkali or alkaline earth metal salt in low concentrations in the polymerization of terephthalic acid (or ester thereof) and ethylene glycol.

Background of the Invention

Polymers such as poly(ethylene terephthalate) are known to be useful for the production of fibers, textiles, films and with certain modifications, molding plastics. The widespread popularity of microwave ovens for home use has initiated interest in polyester containers for food which can be used in microwave or conventional ovens, and which can withstand oven temperatures near 200°C. Poly(ethylene terephthalate) is a material which, if processed properly, has the desirable properties for this end use. A preferred process for producing thin wall trays, dishes, and other articles is thermoforming. The thermoforming process consists of preheating a preformed amorphous polyester sheet to a temperature sufficient to allow deformation of the sheet. The sheet is then shaped into an article via a mold by such means as vacuum assist, air pressure, and/or matched molds.

By the term "glassy state," we mean an amorphous state at temperatures which result in a non-molten condition, i.e., temperatures at which the material is a solid, but capable of being thermoformed.

The thermoforming of unmodified poly(ethylene terephthalate) from sheeting and crystallization in a heated mold is known. The use of unmodified poly(ethylene terephthalate) is objectionable because of its slow crystallization rate, sticking in the mold, distortion of the molded article because of insufficient crystallinity, and molding times too long to be useful on commercial equipment because of its slow crystallization rate.

There are known processes for modifying high molecular weight poly(ethylene terephthalate) to provide fast cycle times, fast crystallization rates, and improved impact resistance. U.S. Patent No. 3,960,807 teaches a process for thermoforming articles from a composition having three essential components, i.e., a crystallizable polyester, a crack stopping agent (preferably a polyolefin), and a nucleating agent. U.S. Patent No. 4,463,121 teaches that the nucleating agents taught in U.S. Patent No. 3,960,807 are completely unnecessary and that poly(ethylene terephthalate) can be modified with a small amount of polyolefin and a heat stabilizer to produce polyesters which exhibit improved impact resistance and high temperature dimensional stability. U.S. Patent No. 4,572,852 describes thermoforming process for ultrahigh molecular weight poly(ethylene terephthalate) with intrinsic viscosities of 0.65 to 1.2.

Other articles and patents describe nucleating agents for poly(ethylene terephthalate), most of which are concerned with obtaining rapid crystallization from the molten state, or crystallization on cooling from the melt, as opposed to the present invention which concerns crystallization from the glassy state. U.S. Patent No. 4,705,844 speaks to using alkaline earth and alkali metals at high concentration to prepare highly nucleated polyesters which are then blended with nonnucleated polyesters to provide fast crystallizing polymers which crystallize rapidly from the melt and are useful in molding compositions which enable the polymers to crystallize in a low temperature mold.

U.S. Patent Nos. 4,344,874; 4,506,050; 4,305,864; 3,368,995; and G.B. Application No. 2,015,013 are of interest.

We are aware of copolymers of poly(ethylene terephthalate) which crystallize rapidly from the glassy state. However, in dealing with the homopolymers to which the present invention relates, it is found that the crystallization kinetics are vastly different from that of copolymers. Even very small quantities of modifying acids or glycols greatly slow crystallization rates from the glass state. It is unexpected that the same crystallization aids useful for copolymers also function well as crystallization aids for homopolymers.

The modifications reported in the literature for poly(ethylene terephthalate) to render it useful for thermoforming, especially for enhancing crystallization rate, are predicated on blending additives into poly(ethylene terephthalate) polymer and extruding sheets to disperse additives uniformity throughout the polymer to form a homogeneous mix. We have surprisingly and unexpectedly found that crystallization rates sufficient for fast cycle times during thermoforming and providing improved impact resistance can be accomplished by the addition of low concentrations of alkali or alkaline earth metal salts to the reaction mixture prior to polycondensation. Those salts are believed to be capable of forming terephthalic acid salts in situ when included in the reaction mix for preparing poly(ethylene terephthalate). Adding the terephthalate salts to an already-formed copolymer would cause breakdown of the polymer, resulting in an undesirable decrease in molecular weight and inherent viscosity. Preferred salts include potassium, sodium, lithium, and magnesium carbonates and acetates. The acid portion of the salt must be volatile enough so when liberated as the acid in the reaction mix, it does not become a chain terminator. It is known in the literature that alkali metal salts of long chain fatty acids (stearic and oleic) are crystallizing from the melt and are blended and coextruded with

2

EP 0 357 518 A1

the polymer (U.S. Patent No. 3,516,957). However, these materials do not enhance crystallization from the glassy state which is necessary for thermoforming from amorphous sheet. Also, if these materials are added to the reaction mix, the reaction which takes place in the mix causes the long chain acids to become polymerization terminators since they are monofunctional and do not totally volatilize from the mix under polycondensation conditions. These materials no longer enhance crystallization from the melt when added to the reaction mix. The metal salts used in the present invention are added to the initial reaction mix and are found to enhance crystallization from the amorphous state. Fillers such as titanium dioxide or talc may be included to improve impact strength stiffness and opacity. Fast crystallization rates are obtained at low concentrations of the metal and do not appear to be enhanced further at high concentrations.

Description of the Invention

According to one aspect of the present invention, there is provided a method of producing a polyester having a rapid rate of crystallization from the glassy state which comprises the steps of

A) preparing a mixture comprising (1) monomers for forming the homopolyester poly(ethylene terephthalate) and (2) an alkali or alkaline earth metal salt of a mineral acid or monofunctional aliphatic acid of 1 to 5 carbon atoms,

B) subjecting the mixture prepared in step A) to polymerization conditions, and

C) recovering a product comprising a polyester having dispersed therein a compound of the metal of said metal salt in sufficient amount to provide 25-5,000 ppm of the elemental metal portion of said compound in the polyester.

According to another aspect of this invention, there is provided a sheet of material capable of being thermoformed into a thin-walled article having a crystallinity of at least 20% after thermoforming, said sheet having a crystallization half-time at 130°C of less than 1 minute from the glassy state, said sheet comprising a polymer consisting essentially of repeat units from terephthalic acid and ethylene glycol, said polyester having an I.V. of 0.60-1.0, and a crystallization aid comprising an alkali or alkaline earth metal compound in sufficient amount to provide 25-5,000 ppm of the elemental metal portion of said compound in the polyester.

Still further, according to the present invention there is provided a shaped, thin-walled, article thermoformed from the sheet described above.

The term poly(ethylene terephthalate) as used herein means a homopolyester consisting essentially of repeating units from terephthalic acid and ethylene glycol, and any small amount of diethylene glycol which is normally present in commercially available PET (about 1.5 mol %). PET having a negligible amount of modification other than with diethylene glycol, i.e., less than 0.5 mol % (normally less than 0.4 mol %) of a conventional coacid or coglycol, may be present. Monomers for forming the homopolyester poly(ethylene terephthalate) are terephthalic acid (or derivatives thereof which result in repeat units from terephthalic acid in the polymer such as esters thereof, e.g., dimethyl terephthalate), and ethylene glycol, plus any minor amounts of diethylene glycol formed in situ during polymerization.

Concentrations of the metal salt to be used in the reaction mix to result in 25 to 5,000 ppm metal in the polymer can easily be calculated by those skilled in the art. For example, the number parts of the compound to be used in the reaction mix to give a certain number parts of the metal based on polymer weight is derived from the following calculation:

$$\text{ppm compound} = \text{ppm metal} \times \frac{\text{molecular wt. of compound}}{\text{molecular wt. of metal}}$$

The crystallization aids are described as alkali and alkaline earth metal salts of mineral acids or organic, monofunctional, aliphatic acids of 1-5 carbon atoms. Such acids are volatile, e.g., have boiling points below 250°C. Preferred metals are sodium, potassium, lithium and magnesium. Preferred acids include carbonic, acetic, oxalic, tartaric and pivalic. Mineral acids such as sulfuric, phosphoric, phosphorus, etc. can also be used. The salts and their preparation are well known in the art and many are commercially available. The metal salts are present in the reaction mix at concentrations sufficient to result in the polyester produced therefrom having dispersed therein a compound of the metal of said metal salt in sufficient amount to provide 25-5,000 ppm, preferably 50-500 ppm, of the elemental metal portion of said compound in the polyester. It is preferred to use the minimum amount of metal salt which will accomplish the fast crystallization rate. Although quantities up to 5,000 ppm elemental metal in the polymer can be used, it is preferred to use no more than 2,000 ppm, and most desirably, less than 500 ppm. Concentrations above 2,000 ppm tend to encourage crystallization during extrusion of the sheet from the molten polymer, which is undesirable.

Conventional additives such as stabilizers, plasticizers, colorants, etc. may be used.

The polyesters are prepared in a conventional manner. Typically, poly(ethylene terephthalate) polymers are prepared from dimethyl terephthalate and ethylene glycol using conventional transesterification and polycondensation catalyst and phosphorus compounds as stabilizers. An example of such conventional process is illustrated in U.S. Patent 4,010,145. The polymers are prepared by melt-phase polymerization to I.V.'s of 0.62 to 0.68 and then ground and solid-state polymerized to I.V.'s of 0.90 to 0.95. The polymers are then extruded into sheets approximately 25 mils in thickness, and the sheet I.V.'s range from 0.80 to 0.89.

3

Thermoforming of the sheets is accomplished by preheating the sheets to a temperature which allows deformation in a mold (about 135°-150°C). This preheated sheet is then formed in a mold which is at a temperature of about 170°C using conventional thermoforming techniques, with vacuum or pressure assistance if desired.

Crystallization half-times are determined by Differential Scanning Calorimeter (DSC) technique isothermally at 130°C. This technique has been found to be useful for determining mold cycle time when articles are formed from sheets on commercial thermoforming equipment. It has been determined that when crystallization half times at 130°C are less than 1 minute, very fast mold cycle times can be achieved on thermoforming equipment; mold cycle times of 8 seconds are achieved. The faster the crystallization half-time the faster the potential for fast molding cycles on thermoforming equipment. Crystallization half-time of 130°C correlate very well with achieveable thermoforming cycle times.

One of the commonly used parameters for describing the crystallization rate of a polymer is the crystallization half-time, $t_{1/2}$. The crystallization half-time is simply the time at which the crystallization of the originally amorphous sample is half completed according to the method used to monitor crystallinity and may be determined in conventional manners. The half-time is dependent on the crystallization temperature.

Crystallization half-times may be determined by methods well known in the art. One method is by differential scanning calormetry (DSC), and a Perkin-Elmer DSC-2 differential scanning calorimeter may be used.

The sample is crystallized isothermally in the DSC instrument at a chosen temperature from the glassy state. As the sample crystallizes, the exothermic peak is observed on a chart recorder. The time at which the peak occurs approximates the crystallization half-time for the polymer at that temperature. The experiment is repeated for a number of temperatures to characterize the sample.

Nitrogen at about 20 psig is required as the purge gas for determination of approximate crystallization half-times from the glassy state. Nitrogen at about 20 psig is the preferred purge gas for determinations from the glassy state. Temperature calibration standards are used for normal melting point calibrations and are suitable as described in the instrument manual or in ASTM Standard Method D-3418. Indium and lead standards are normally used.

The following procedure is followed:

1. Run a heating scan of the sample at 20°C/min. If a crystallization peak does not appear on the first cycle heating, quench the sample from the melt, and run a second heating cycle.

2. With nitrogen as the purge gas, heat the sample at 320°C/min to 30°C above the melting point. Hold one minute, then quickly remove the sample from the DSC and quench it in such a manner to render the sample amorphous.

3. Allow the DSC to cool at 320°C/min to a temperature at least 30°C below the glass transition temperature.

4. Place the sample in the DSC instrument. Wait one minute. Heat at 320°C/min to about 10°C below the crystallization temperature. Turn on the chart and hold isothermally until a peak is obtained or for at least ten minutes.

5. After a peak is obtained, measure the distance in mm from the point at which chart was started to the peak. Divide this distance by the chart speed in mm/min to obtain the approximate half-time in minutes. If desired, the time of chart movement can be measured with a stop watch.

6. Repeat Steps 2 and 3.

7. Repeat Step 4, heating to about 5°C below crystallization temperature.

8. Repeat Steps 2, 3, and 4, each time varying isothermal temperature until sufficient data points are obtained.

9. If desired, plot the approximate half-time time in minutes versus crystallization temperature in °C.

Melt temperatures and crystallization temperatures are all corrected. Times to reach exotherm peaks (approximate half-times) are times from when the instrument arrives at the desired crystallization temperature to the occurrence of the peak, i.e.,

$$t_p, \min = D/CS$$

where D is the measured distance in mm on the chart paper from arrival at the desired temperature to the peak, and CS is the chart speed in mm/min. The ratio $t_p/t_{1/2}$ is between 0.85 and 1.04 for $n \geq 2$. The curve of $t_p$ vs. crystallization temperature is a sufficient approximation of the curve $t_{1/2}$ vs. crystallization temperature.

As used herein, the inherent viscosity (I.V.) is measured at 25°C using 0.50 gram of copolyester per 100 mL of a solvent consisting of 60 percent by weight phenol and 40 percent by weight tetrachloroethane.

The following examples are submitted for a better understanding of the invention. In the examples, PET is prepared using the general procedure described in U.S. Patent No. 4,010,145, except for the addition of the metal salt to the reaction mix.

In the examples, the sheets are subjected to bending tests to assess impact resistance. The test consists of cutting sheets into four-inch squares and crystallizing the sheets in a hot-oil bath at 135°C for 20 seconds and 165°C for 7 seconds to simulate thermoforming. Five four-inch square sheets are treated, and then five 180°C bends are made on each sheet, the number of breaks and no breaks are recorded. Further bending tests are done after oven aging. Five four-inch square sheets, which have been treated in the oil bath at 135°C for 20 seconds and 165°C for 7 seconds, are further heated in a hot-air circulating oven at 204°C for 30 minutes. This simulates cooking at 400°F in a conventional oven. The bending tests are then made after this treatment and results indicated in Table I.

4

## Example 1

Example 1 in Table 1 shows poly(ethylene terephthalate) sheet with an 0.83 I.V. which contains no nucleator or crystallization aid. The sheet has a long crystallization half-time at 130°C (144 seconds), which is too long to be used on conventional thermoforming equipment. The material is brittle when subjected to the bending test which shows poor impact resistance.

## Example 2, 3, and 4

Examples 2, 3, and 4 shown in Table 1 show poly(ethylene terephthalate) containing 359, 900, and 1800 ppm sodium, respectively, which was included in the reaction mixture as sodium carbonate during the polymer preparation. The crystallization temperature on heating was lowered from 179°C (control in Example 1) to 145°C. The crystallization half times at 130°C is reduced to 12 seconds and impact resistance is excellent for all three samples before and after aging at 204°C for 30 minutes.

## Examples 5 and 6

Examples 5 and 6 shown in Table 1 show poly(ethylene terephthalate) containing 359 and 1800 ppm sodium which is included in the reaction mixture as sodium acetate during the polymer preparation. The crystallization half times at 130°C are reduced to 18 seconds which is conducive to fast cycle times when using a thermoforming machine. The impact resistance is excellent for both samples before and after aging at 204°C for 30 minutes.

## Example 7

Example 7 shown in Table 1 shows poly(ethylene terephthalate) containing 400 ppm potassium which is included in the reaction mixture as potassium acetate during the polymer preparation. The crystallization half time at 130°C is 24 seconds, well within the time required for fast molding cycles when using a thermoforming machine. The impact resistance is also very good.

## Example 8

Example 8 shown in Table 1 shows poly(ethylene terephthalate) containing 2000 ppm potassium which is included in the reaction mixture as potassium carbonate during the polymer preparation. The crystallization half time from the glass at 130°C is sufficiently fast (24 seconds) for fast cycle times when using a thermoforming machine, and the impact resistance is excellent as measured by the bending test.

## Example 9 and 10

Examples 9 and 10 shown in Table 1 show poly(ethylene terephthalate) containing 400 and 800 ppm lithium, respectively, which is included in the reaction mixture during the polymer preparation. The crystallization half times at 130°C are considerably faster (18 seconds) than those of the control shown in Example 1 and are conducive for fast thermoforming cycles. The impact resistance is far superior than that of the control shown in Example 1.

## Table 1
### Crystallization and Impact Date for
### Poly(Ethylene Terephthalate)
### Containing Crystallization Aid

| Ex. No. | I.V. of Sheet | Additive | Concentration of Additive, ppm | Crystallization Set Temperature on Heating °C | Crystallization Half-Time, Seconds, at 130°C | Bending Impact [1] | Bending Impact [2] After Aging at 204°C 30 Minutes |
|---|---|---|---|---|---|---|---|
| 1 | 0.83 | 0 | 0 | 179 | 144 | 25 breaks | 25 breaks |
| 2 | 0.85 | $Na_2CO_3$ | 359 as Na | 145 | 12 | 25 no breaks | 25 no breaks |
| 3 | 0.85 | $Na_2CO_3$ | 900 as Na | 140 | 12 | 24 no breaks/ 1 break | 25 no breaks |
| 4 | 0.82 | $Na_2CO_3$ | 1800 as Na | 145 | 12 | 25 no breaks | 24 no breaks/ 1 break |
| 5 | 0.83 | NaO$\overset{O}{\overset{\|}{C}}$-CH$_3$ | 359 as Na | 144 | 18 | 25 no breaks | 25 no breaks |
| 6 | 0.84 | NaO$\overset{O}{\overset{\|}{C}}$-CH$_3$ | 1800 as Na | 144 | 18 | 25 no breaks | 23 no breaks/ 2 breaks |
| 7 | 0.84 | KO$\overset{O}{\overset{\|}{C}}$-CH$_3$ | 400 as K | 145 | 24 | 24 no breaks/ 1 break | 25 no breaks |

6

Table 1 (continued)

| Ex. No. | I.V. of Sheet | Additive | Concentration of Additive, ppm | Crystallization on Set Temperature on Heating °C | Crystallization Half-Time, Seconds, at 130°C | Bending[1] Impact | Bending[2] Impact After Aging at 204°C 30 Minutes |
|---|---|---|---|---|---|---|---|
| 8 | 0.84 | $K_2CO_3$ | 2000 as K | 145 | 24 | 25 no breaks | 23 no breaks/ 2 breaks |
| 9 | 0.84 | $LiO\overset{O}{C}-OCH_3$ | 400 as Li | 144 | 18 | 25 no breaks | 24 no breaks/ 1 break |
| 10 | 0.85 | $LiO\overset{O}{C}-OCH_3$ | 800 as Li | 145 | 18 | 24 no breaks/ 1 break | 25 no breaks |

[1]Crystallized in oil bath 135°C for 20 seconds and 165°C for 7 seconds.

[2]Treated at 204°C for 30 minutes after crystallizing at 135°C for 20 seconds and 165°C for 7 seconds.

Unless otherwise specified, all parts, percentages, ratios, etc., are by weight.

The invention has been described in detail with particular reference to preferred embodiments thereof, but it will be understood that variations and modifications can be effected within the spirit and scope of the invention.

**Claims**

1. The method of producing a homopolyester having a rapid rate of crystallization from the glassy state characterized by the steps of

A) preparing a mixture comprising (1) monomers for forming the homopolyester poly(ethylene terephthalate) and (2) an alkali or alkaline earth metal salt of a mineral acid or monofunctional aliphatic acid of 1 to 5 carbon atoms,

B) subjecting the mixture prepared in step A) to polymerization conditions, and

C) recovering a product comprising a copolyester having dispersed therein a compound of the metal of said metal salt in sufficient amount to provide 25-5,000 ppm of the elemental metal portion of said compound in the copolyester.

2. The method of Claim 1 wherein the metal in said metal salt is selected from sodium, potassium, lithium, and magnesium.

3. The method of Claim 2 wherein said metal is sodium.

4. The method of Claim 1 wherein said mineral or monofunctional acid is selected from carbonic, acetic, oxalic, tartaric, and pivalic.

5. The method of Claim 4 wherein said acid is carbonic or acetic.

6. The method of Claim 1 wherein said metal salt is present in sufficient amount to provide elemental metal in the copolyester in an amount of 25 to 5,000 ppm.

7. A sheet of material capable of being thermoformed into a thin-walled article having a crystallinity of at least 20% after thermoforming, said sheet having a crystallization half-time at 130°C of less than 1 minute from the glassy state, said sheet characterized as a homopolymer of poly(ethylene terephthalate), said homopolyester having an I.V. of 0.60-1.0, and a crystallization aid comprising an alkali or alkaline earth metal compound in sufficient amount to provide 25-5,000 ppm of the elemental metal portion of said compound in the copolyester.

8. The sheet of Claim 7 wherein the metal in said metal compound is selected from sodium, potassium, lithium, and magnesium.

9. The sheet of Claim 8 wherein said metal is sodium.

10. The sheet of Claim 7 wherein said metal compound is present in sufficient amount to provide elemental metal in said copolyester in an amount of 50 to 500 ppm.

11. A shaped, thin-walled, article thermoformed from the sheet of Claim 7.

12. A shaped, thin-walled, article thermoformed from the sheet of Claim 8.

13. A shaped, thin-walled, article thermoformed from the sheet of Claim 9.

14. A shaped, thin-walled, article thermoformed from the sheet of Claim 10.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 215 364 (HOECHST AG) * claims 1-7,9; pages 12-15; examples 2-6; page 7, line 27 - page 8, line 32 * | 1-6 | C 08 K 5/09 C 08 K 3/26 C 08 L 67/02 C 08 G 63/183 |
| A | DE-A-2 264 307 (CELANESE CORP.) * claims 1,6; page 11, example 1; page 8, paragraph 2; page 9 * | 1,7 | |
| A | EP-A-0 186 456 (POLYPLASTICS CO. LTD.) * claims 1-4; page 15, examples 1,9; page 8, lines 27,28 * | 1 | |
| A | US-A-3 957 706 (R. R. LIGHT et al.) * claim 1; column 3, lines 5-37 * | 1,4 | |
| A | JOURNAL OF POLYMER SCIENCE. POLYMER PHYSICS EDITION vol. 22, no. 12, December 1984, pages 2063-2072, New York, USA; D. GARCIA: "Heterogeneous Nucleation of Poly(ethylene Terephthalate)" * page 2067, table 1; page 2071, conclusions * | 1 | TECHNICAL FIELDS SEARCHED (Int. Cl.5) C 08 K C 08 G |

The present search report has been drawn up for all claims

| Place of search | Date of completion of the search | Examiner |
|---|---|---|
| BERLIN | 16-11-1989 | VOIGTLAENDER R O J |